# EUROPEAN PATENT APPLICATION

(11) **EP 4 852 211 A1**
(43) Date of publication of application: **09.12.2026**
(21) Application number: 25898903.7
(22) Date of filing: 25.11.2025
(51) Int. Cl.: H01M 50/609

(54) **ELECTROLYTE INJECTION DEVICE**

(30) Priority: 29.11.2024 KR 20240175841
(71) Applicant: LG Energy Solution, Ltd., Seoul 07335 (KR)
(72) Inventor: KIM, Jung Hyuk, Daejeon 34122 (KR); KANG, Chan Woo, Daejeon 34122 (KR); CHUNG, Jin Hae, Daejeon 34122 (KR); LEE, Chang Yong, Daejeon 34122 (KR); JOO, Jae Hwan, Daejeon 34122 (KR)
(74) Representative: Goddar, Heinz J.
(86) International application number: PCT/KR2025/019682
(87) International publication number: WO 2026/116948

(57) **Abstract**

Disclosed is an electrolyte injection apparatus including an electrolyte receiving portion configured to receive electrolyte therein, a socket coupled to a lower end of the electrolyte receiving portion, an injection portion located in the socket, the injection portion being configured to discharge the electrolyte, a needle pin configured to open and close an injection port of the injection portion, and a main body portion configured to receive the electrolyte receiving portion and at least a part of the socket, wherein the socket has a plurality of air holes formed therein.

## Description

### [Technical Field]

This application claims the benefit of priority to Korean Patent Application No. 10-2024-0175841 filed on November 29, 2024, the disclosure of which is incorporated herein by reference in its entirety.

The present invention relates to an electrolyte injection apparatus. More particularly, the present invention relates to an electrolyte injection apparatus configured such that the form of a socket configured to inject electrolyte is changed to shorten the time required for electrolyte injection and to prevent waste of the electrolyte during an electrolyte injection process.

### [Background Art]

Lithium secondary batteries, which are charged and discharged by the migration of lithium ions, are used not only for small battery cells used in mobile devices and small electronic products due to high energy density and high charging voltage but also for medium and large battery packs used as energy sources for electric vehicles and energy storage systems that require high power and high voltage.

A lithium secondary battery is manufactured by receiving an electrode assembly in a battery case, injecting electrolyte into the battery case, and sealing the battery case. In order to prevent performance degradation of a battery cell, it is important to inject a sufficient amount of electrolyte into the battery case such that the electrode assembly is uniformly impregnated with the electrolyte.

Recently, there is an increasing need for battery cells with high energy density for use in medium and large battery packs. One method of increasing the energy density of the battery cell is increasing the size of the battery cell. However, as the size of the battery cell increases, the time required for electrolyte injection also increases, consequently extending the manufacturing time of the battery cell.

Therefore, various attempts are being made to reduce the manufacturing time of the battery cell by increasing the electrolyte injection speed to shorten the electrolyte injection time.

Meanwhile, the appropriate amount of electrolyte to be injected into the battery case is determined considering the volume, etc. of the electrode assembly before electrolyte injection. However, during a process of injecting the electrolyte into the battery case, vortex formation occurs, causing a part of the electrolyte to fail to enter the battery case and instead contaminate an electrolyte injection apparatus.

Furthermore, when the electrolyte injection is stopped, the electrolyte may splash and contaminate the electrolyte injection apparatus. Even during the electrolyte injection process, the electrolyte may scatter, contaminating the electrolyte injection apparatus.

As such, a predetermined amount of electrolyte is not injected into the battery case, resulting in the actual amount of electrolyte injected into the battery case being less than the predetermined amount of electrolyte.

Consequently, a method of injecting a few milliliters more electrolyte than the predetermined amount is used. However, this results in the inability to inject the exact amount of electrolyte and may lead to unnecessary electrolyte waste.

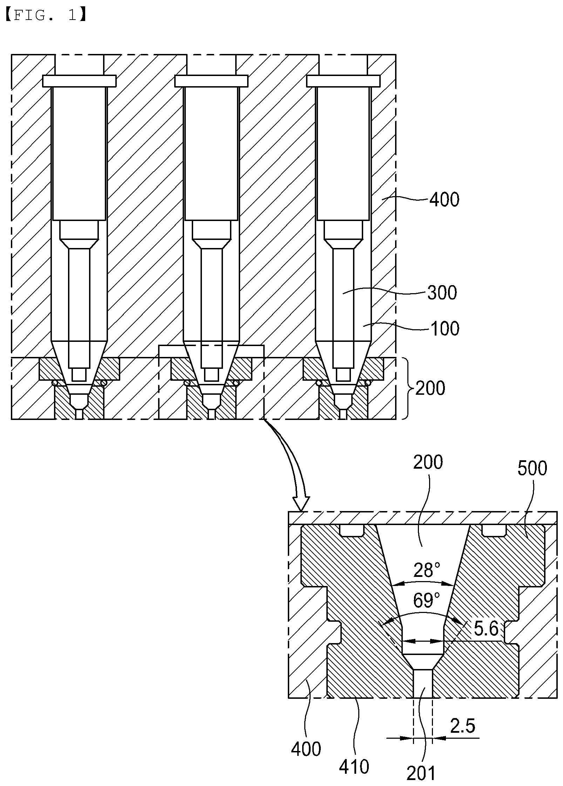

In this regard, FIG. 1 is a vertical sectional view and a partial enlarged sectional view of a conventional electrolyte injection apparatus.

Referring to FIG. 1, the conventional electrolyte injection apparatus includes an electrolyte receiving portion 100 configured to receive electrolyte therein, an injection portion 200 located under the electrolyte receiving portion 100, and a needle pin 300 configured to open and close an injection port 201 of the injection portion 200, which constitute a single unit, wherein a plurality of units is provided in a main body portion 400.

The injection portion 200 forms an internal space of a socket 500, and includes a first truncated cone having a diameter gradually decreasing from top to bottom, a cylinder located at a lower end of the first truncated cone, the diameter of the cylinder being uniform, and a second truncated cone located at a lower end of the cylinder, the diameter of the second truncated cone gradually decreasing downward. The angle of an inclined surface of the first truncated cone is 28°, and the angle of an inclined surface of the second truncated cone is 69°. In addition, the diameter of the cylinder is 5.6 mm, and the diameter of the injection port 201 is 2.5 mm. The injection port 201 is located on the same plane as a lower surface 410 of the main body portion.

When electrolyte is injected into a cylindrical battery cell using the electrolyte injection apparatus configured as described above, the degree of contamination of the electrolyte injection apparatus is severe, necessitating a reduction in the amount of wasted electrolyte.

Meanwhile, in order to shorten the electrolyte injection time, a method of increasing the size of the electrolyte injection port or increasing the electrolyte injection volume per unit time may be considered. However, if the electrolyte injection volume and injection speed are too high, a separator constituting an electrode assembly may be folded, potentially causing internal short circuit between a positive electrode and a negative electrode.

Therefore, there is a need for technology capable of reducing a vortex phenomenon during an electrolyte injection process to minimize splashing of electrolyte, thereby reducing the level of contamination of an electrolyte injection apparatus.

### [Disclosure]

### [Technical Problem]

The present invention has been made in view of the above problems, and it is an object of the present invention to provide an electrolyte injection apparatus capable of minimizing splashing of electrolyte during an electrolyte injection process, thereby reducing the level of contamination of the electrolyte injection apparatus and shortening the electrolyte injection time.

### [Technical Solution]

An electrolyte injection apparatus according to the present invention to accomplish the above object includes an electrolyte receiving portion configured to receive electrolyte therein, a socket coupled to a lower end of the electrolyte receiving portion, an injection portion located in the socket, the injection portion configured to discharge the electrolyte, a needle pin configured to open and close an injection port of the injection portion, and a main body portion configured to receive the electrolyte receiving portion and at least a part of the socket, wherein the socket has a plurality of air holes formed therein.

In the electrolyte injection apparatus according to the present invention, the socket may include an internal socket located in the main body portion and an external socket extending downward from the main body portion.

In the electrolyte injection apparatus according to the present invention, the injection portion may include a first zone located at the top, the first zone formed in a relatively large-diameter cylindrical shape, a third zone located at the bottom, the third zone formed in a relatively small-diameter cylindrical shape, and a second zone configured to connect the first zone and the third zone to each other, the second zone formed in a shape in which the diameter of the second zone decreases from the first zone to the third zone.

In the electrolyte injection apparatus according to the present invention, the diameter of the third zone may be 50% or more of the diameter of the first zone.

In the electrolyte injection apparatus according to the present invention, the diameter of the third zone may be 5.6 mm, and the diameter of the first zone may be 10 mm.

In the electrolyte injection apparatus according to the present invention, the third zone may comprise a plurality of air holes communicating with the outside.

In the electrolyte injection apparatus according to the present invention, the air holes may extend obliquely downward from a side surface of the third zone while formed through the external socket so as to be connected to a lower surface of the external socket at which the injection port is located.

In the electrolyte injection apparatus according to the present invention, the diameter of each of the air holes may be 1 mm.

In the electrolyte injection apparatus according to the present invention, the height of the first zone may be at least three times the diameter of the first zone.

The electrolyte injection apparatus according to the present invention may include a hopper coupled to the external socket, wherein the external socket may be coupled to the hopper so as to be inserted thereinto.

In the electrolyte injection apparatus according to the present invention, a lower part of the first zone, the second zone, and the third zone of the injection port may be formed in the external socket.

In the electrolyte injection apparatus according to the present invention, the hopper may be coupled to the socket at an upper end thereof and to the cylindrical battery cell at a lower end thereof, and the hopper may comprise a first sealing member at the upper end thereof and a second sealing member at the lower end thereof.

In the electrolyte injection apparatus according to the present invention, the sum of the heights of the lower part of the first zone, the second zone, and the third zone constituting the interior of the external socket inserted into the hopper may be 50% or more of the total height of the injection portion.

In the electrolyte injection apparatus according to the present invention, the sum of the heights of the lower part of the first zone, the second zone, and the third zone may be 30 mm.

In addition, the present invention may provide various combinations of the above solving means.

### [Advantageous Effects]

According to the present invention, it is possible to significantly reduce vortex formation during electrolyte discharge, thereby minimizing contamination of an electrolyte injection apparatus caused by the vortex formation.

In addition, the shape of an injection portion configured to discharge electrolyte is changed to increase the flow rate, whereby the electrolyte injection time is shortened.

### [Description of Drawings]

FIG. 1 is a vertical sectional view and a partial enlarged sectional view of a conventional electrolyte injection apparatus.
FIG. 2 is a vertical sectional view and a partial enlarged sectional view of an electrolyte injection apparatus according to the present invention.
FIG. 3 is a vertical sectional view showing sockets of the electrolyte injection apparatuses according to FIGs. 1 and 2 for comparison.
FIG. 4 is a vertical sectional view showing the state in which the electrolyte injection apparatus according to FIG. 2 is connected to a cylindrical battery cell via a hopper.
FIG. 5 is a photograph showing the results of an example and a comparative example.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

An electrolyte injection apparatus according to the present invention may be configured such that a unit injection apparatus including an electrolyte receiving portion 100, an injection portion 200, and a needle pin 300 is disposed in a space formed in a main body portion 400 and the unit injection apparatus is provided in two or more. In addition, the unit injection apparatuses may be disposed at regular intervals while forming two or more rows and two or more columns.

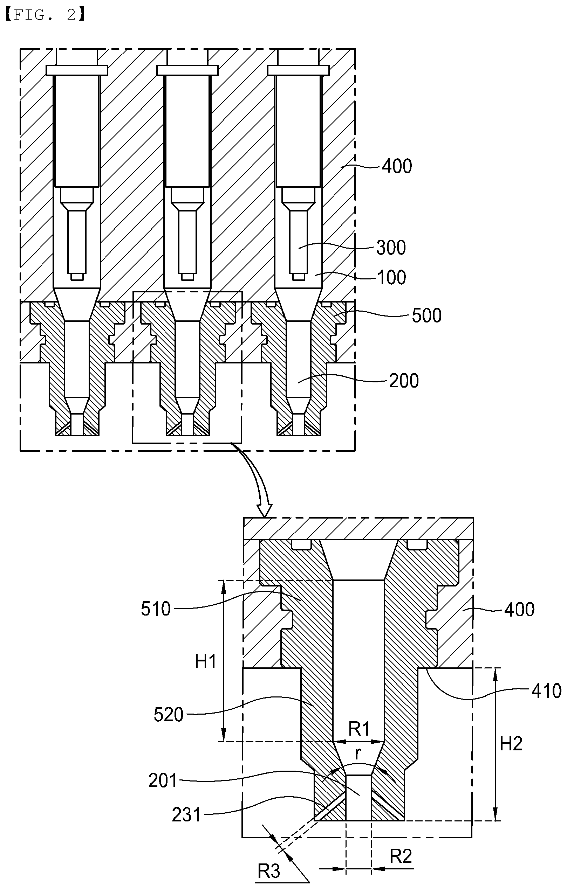

FIG. 2 is a vertical sectional view and a partial enlarged sectional view of an electrolyte injection apparatus according to the present invention. In the vertical sectional view of FIG. 2, three unit injection apparatuses are disposed.

Referring to FIG. 2, the electrolyte injection apparatus according to the present invention includes an electrolyte receiving portion 100 configured to receive electrolyte therein, a socket 500 coupled to a lower end of the electrolyte receiving portion 100, an injection portion 200 located in the socket 500, the injection portion being configured to discharge the electrolyte, a needle pin 300 configured to open and close an injection port 201 of the injection portion 200, and a main body portion 400 configured to receive the electrolyte receiving portion 100 and at least a part of the socket 500, wherein the socket 500 has a plurality of air holes 231 formed therein.

The electrolyte received in the electrolyte receiving portion 100 is discharged through the injection port 201 via the injection portion 200. When the needle pin 300, disposed above the injection port 201, moves downward to block the injection port 201, the injection port 201 is closed. Conversely, when the needle pin 300 moves upward, the injection port 201 is opened. A sealing member, such as rubber or an O-ring, is added to a lower end of the needle pin 300. When the needle pin 300 blocks the injection port 201, therefore, the injection port 201 may be completely sealed.

An electrolyte movement path is formed in the socket 500, and the injection portion 200 is formed by the path.

In the present invention, the socket 500 includes a portion extending downward from a lower surface 410 of the main body portion. Specifically, the socket 500 includes an internal socket 510 located in the main body portion 400 and an external socket 520 extending downward from the main body portion 400.

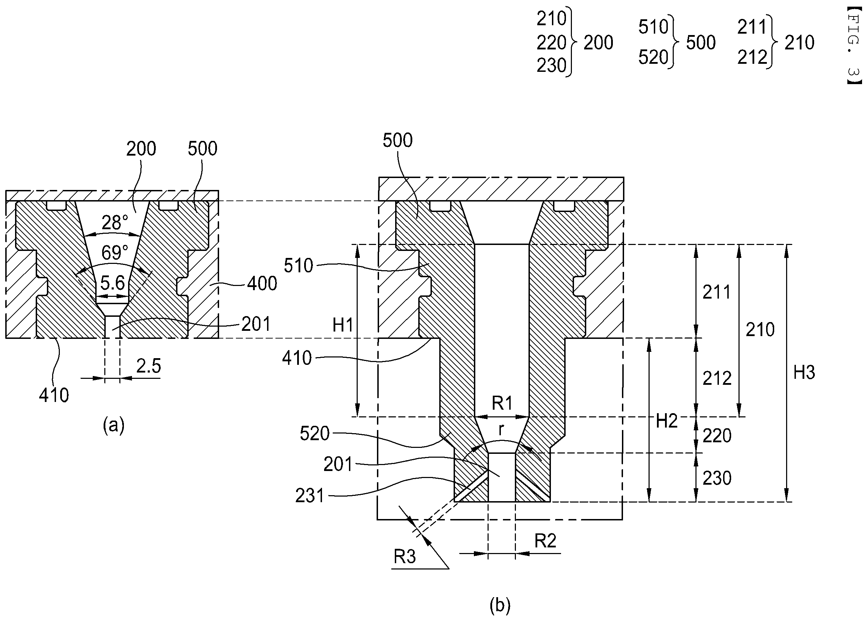

FIG. 3 is a vertical sectional view showing the sockets of the electrolyte injection apparatuses according to FIGs. 1 and 2 for comparison.

Referring to FIG. 3, FIG. 3(a) shows the socket 500 and the injection portion 200 of the conventional electrolyte injection apparatus, and FIG. 3(b) shows the socket 500 and the injection portion 200 of the electrolyte injection apparatus according to the present invention.

In FIG. 3(a), the distal end of the injection port 201 is located on the same plane as the lower surface 410 of the main body portion, whereas in FIG. 3(b), the distal end of the injection port 201 extends farther from the lower surface 410 of the main body portion. That is, the present invention provides the effect of reducing the degree of contamination of the socket 500 by the electrolyte during an electrolyte injection process by configuring the socket 500 to extend farther downward than the lower surface 410 of the main body portion.

The injection portion 200 includes a first zone 210 located at the top and formed in a relatively large-diameter cylindrical shape, a third zone 230 located at the bottom and formed in a relatively small-diameter cylindrical shape, and a second zone 220 configured to connect the first zone 210 and the third zone 230 to each other and formed in a shape in which the diameter of the second zone gradually decreases from the first zone 210 to the third zone 230.

Specifically, the diameter R2 of the third zone is 50% or more of the diameter R1 of the first zone, more specifically 50% to 70% of the diameter R1 of the first zone. For example, the diameter R2 of the third zone is 5.6 mm, and the diameter R1 of the first zone is 10 mm.

Meanwhile, a plurality of air holes 231 communicating with the outside is formed in the third zone 230. The air holes 231 may reduce turbulence during electrolyte injection, thereby reducing the amount of splashed electrolyte.

Although the number of air holes 231 is not particularly limited, 2 to 5 air holes may be provided, and the air holes 231 may be disposed at uniform intervals.

The air holes 231 extend obliquely downward from a side surface of the third zone 230 while being formed through the external socket 520 so as to be connected to the lower surface of the external socket at which the distal end of the injection port 201 is located. Each air hole 231 is formed in a cylindrical shape having a constant diameter. The diameter R3 of the air hole may be 1 mm to 3 mm, specifically 1 mm.

Meanwhile, compared to the conventional electrolyte injection apparatus shown in FIG. 1, the electrolyte injection apparatus according to the present invention is configured such that the height H1 of the first zone received in the main body portion 400 extends. Specifically, the height H1 of the first zone may be at least three times the diameter R1 of the first zone. For example, when the diameter R1 of the first zone is 10 mm, the height H1 of the first zone may be 32 mm.

In the present invention, the second zone 220 is formed in the form of a truncated cone, wherein the angle r formed by a side surface of the truncated cone may be 69°.

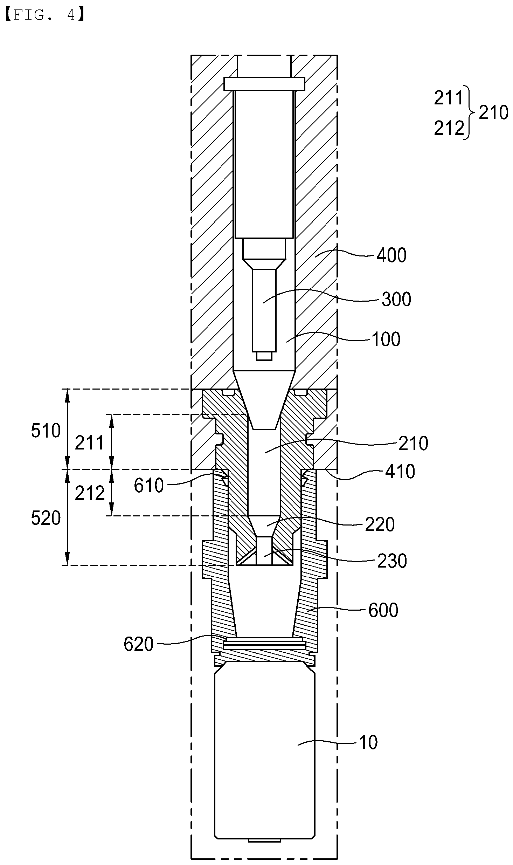

FIG. 4 is a vertical sectional view showing the state in which the electrolyte injection apparatus according to FIG. 2 is connected to a cylindrical battery cell via a hopper.

Referring to FIG. 4, the electrolyte injection apparatus according to the present invention includes a hopper 600 coupled to the external socket 520, wherein the external socket 520 is coupled to the hopper 600 so as to be inserted thereinto.

A lower part 212 of the first zone, the second zone 220, and the third zone 230 of the injection port 200 are formed in the external socket 520. That is, the lower part 212 of the first zone, the second zone 220, and the third zone 230 extend outward from the lower surface 410 of the main body portion.

The hopper 600 is coupled to the socket 500 at an upper end thereof and to the cylindrical battery cell 10 at a lower end thereof, and includes a first sealing member 610 at the upper end thereof and a second sealing member 620 at the lower end thereof.

That is, the socket 500 and the cylindrical battery cell 10 may communicate with each other through the hopper 600. In addition, sealing force is increased at the part at which the socket 500 and the hopper 600 are connected to each other by the first sealing member 610, and sealing force is increased at the part at which the hopper 600 and the cylindrical battery cell 10 are connected to each other by the second sealing member 620.

The electrolyte discharged through the injection port 201 located at the end of the injection portion 200 is injected into the cylindrical battery cell 10 via the interior of the hopper 600. Since the sealed state formed by the first sealing member 610 and the second sealing member 620 is maintained, leakage of the electrolyte from the hopper 600 may be prevented.

However, the electrolyte may splash in the hopper 600. In the present invention, the level of contamination caused by splashing is reduced by modifying the shape of the socket 500.

Each of the first sealing member 610 and the second sealing member 620 may be an O-ring, and the O-ring may be made of ethylene-propylene diene monomer (EPDM).

Referring to FIG. 3 together with FIG. 4, the sum H2 of the heights of the lower part 212 of the first zone, the second zone 220, and the third zone 230 constituting the interior of the external socket 520 inserted into the hopper 600 is 50% or more, specifically 50% to 80%, of the total height H3 of the injection portion.

For example, the sum H2 of the heights of the lower part 212 of the first zone, the second zone 220, and the third zone 230 may be 30 mm.

Hereinafter, the present invention will be described with reference to an example. However, the example is provided only for easier understanding of the present invention and should not be construed as limiting the scope of the present invention.

### <Example>

A hopper is coupled to the top of a cylindrical battery cell, the hopper and the cylindrical battery cell are inserted into a chamber, and the top of the hopper is coupled to the socket of the electrolyte injection apparatus shown in FIG. 2 in a vacuum pressure state.

In the state in which the interior of the battery cell is kept under vacuum, the pressure in the chamber is adjusted to atmospheric pressure to create a pressure difference. The needle pin is moved upward, and 35 ml of electrolyte is injected using the pressure difference. The time taken to inject 35 ml of electrolyte was measured as 1.57 seconds.

The electrolyte injection apparatus is configured to have a structure in which the external socket protrudes farther downward from the lower surface of the main body portion. The first zone is formed in a cylindrical shape with a diameter of 10 mm and a height of 32 mm, the second zone is configured such that the angle of an inclined surface of the truncated cone is 69°, and the third zone has a diameter of 5.6 mm and two air holes. In addition, the sum of the heights of the lower part of the first zone, the second zone, and the third zone forming the internal space of the external socket is 30 mm.

### <Comparative example>

A hopper is coupled to the top of a cylindrical battery cell, the hopper and the cylindrical battery cell are inserted into a vacuum chamber, and the top of the hopper is coupled to the socket of the conventional electrolyte injection apparatus shown in FIG. 1 in a vacuum pressure state.

In the state in which the interior of the battery cell is kept under vacuum, the pressure in the chamber is adjusted to atmospheric pressure to create a pressure difference. The needle pin is moved upward, and 35 ml of electrolyte is injected using the pressure difference. The time taken to inject 35 ml of electrolyte was measured as 2.85 seconds.

In the electrolyte injection apparatus of FIG. 1, the injection portion is constituted by the first truncated cone, the cylinder located at the lower end of the first truncated cone, the diameter of the cylinder being uniform, and the second truncated cone located at the lower end of the cylinder, the diameter of the second truncated cone gradually decreasing downward. The angle of the inclined surface of the first truncated cone is 28°, and the angle of the inclined surface of the second truncated cone is 69°. In addition, the diameter of the cylinder is 5.6 mm, and the diameter of the injection port is 2.5 mm.

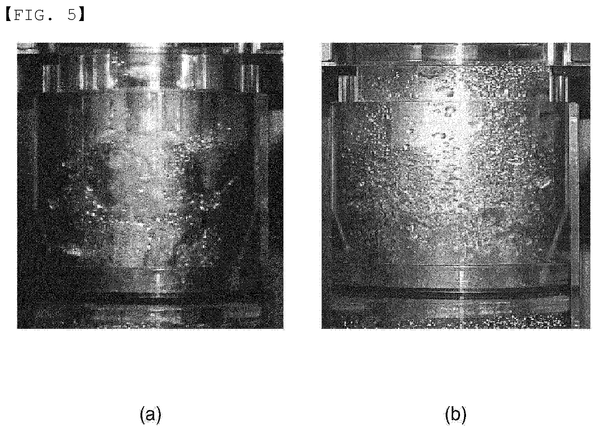

FIG. 5 is a photograph showing the results of the example and the comparative example.

Referring to FIG. 5, FIG. 5(a) shows the result of the example, and FIG. 5(b) shows the result of the comparative example.

Upon examining the degree of external contamination of the hopper, FIG. 5(a) shows reduced vortex levels, indicating contamination primarily confined to the lower end of the hopper, and FIG. 5(b) shows high vortex levels, resulting in a larger volume of sprayed electrolyte and contamination extending up to the upper end of the hopper.

As such, when the electrolyte injection apparatus according to the present invention is used, it is possible to significantly shorten the electrolyte injection time, since the first zone of the injection portion is formed in a large-diameter cylindrical shape and the diameter of the injection port is increased.

In addition, since the air holes are provided in the third zone, splashing of the electrolyte is reduced, whereby it is possible to decrease the contamination area of the hopper.

Those skilled in the art to which the present invention pertains will appreciate that various applications and modifications are possible within the scope of the present invention based on the above description.

### (Description of Reference Symbols)

10: Cylindrical battery cell
100: Electrolyte receiving portion
200: Injection portion
201: Injection port
210: First zone
211: Upper part of first zone
212: Lower part of first zone
220: Second zone
230: Third zone
231: Air hole
300: Needle pin
400: Main body portion
410: Lower surface of main body portion
500: Socket
510: Internal socket
520: External socket
600: Hopper
610: First sealing member
620: Second sealing member
H1: Height of first zone
H2: Sum of heights of lower part of first zone, second zone, and third zone
H3: Total height of injection portion
R1: Diameter of first zone
R2: Diameter of third zone
R3: Diameter of air hole

## Claims

1. An electrolyte injection apparatus comprising:
an electrolyte receiving portion configured to receive electrolyte therein;
a socket coupled to a lower end of the electrolyte receiving portion;
an injection portion located in the socket, the injection portion configured to discharge the electrolyte;
a needle pin configured to open and close an injection port of the injection portion; and
a main body portion configured to receive the electrolyte receiving portion and at least a part of the socket, wherein
the socket has a plurality of air holes formed therein.

2. The electrolyte injection apparatus according to claim 1, wherein the socket comprises:
an internal socket located in the main body portion; and
an external socket extending downward from the main body portion.

3. The electrolyte injection apparatus according to claim 1, wherein the injection portion comprises:
a first zone located at a top, the first zone formed in a relatively large-diameter cylindrical shape;
a third zone located at a bottom, the third zone formed in a relatively small-diameter cylindrical shape; and
a second zone configured to connect the first zone and the third zone to each other, the second zone formed in a shape in which a diameter of the second zone decreases from the first zone to the third zone.

4. The electrolyte injection apparatus according to claim 3, wherein a diameter (R2) of the third zone is 50% or more of a diameter (R1) of the first zone.

5. The electrolyte injection apparatus according to claim 4, wherein
the diameter of the third zone is 5.6 mm, and
the diameter of the first zone is 10 mm.

6. The electrolyte injection apparatus according to claim 3, wherein the third zone comprises a plurality of air holes communicating with an outside.

7. The electrolyte injection apparatus according to claim 6, wherein the air holes extend obliquely downward from a side surface of the third zone while formed through the external socket so as to be connected to a lower surface of the external socket at which the injection port is located.

8. The electrolyte injection apparatus according to claim 7, wherein a diameter (R3) of each of the air holes is 1 mm.

9. The electrolyte injection apparatus according to claim 3, wherein a height (H1) of the first zone is at least three times a diameter (R1) of the first zone.

10. The electrolyte injection apparatus according to claim 2, comprising:
a hopper coupled to the external socket, wherein
the external socket is coupled to the hopper so as to be inserted thereinto.

11. The electrolyte injection apparatus according to claim 10, wherein a lower part of a first zone, a second zone, and a third zone of the injection port are formed in the external socket.

12. The electrolyte injection apparatus according to claim 10, wherein
the hopper is coupled to the socket at an upper end thereof and to the cylindrical battery cell at a lower end thereof, and
the hopper comprises a first sealing member at the upper end thereof and a second sealing member at the lower end thereof.

13. The electrolyte injection apparatus according to claim 10, wherein a sum (H2) of heights of a lower part of a first zone, a second zone, and a third zone constituting an interior of the external socket inserted into the hopper is 50% or more of a total height (H3) of the injection portion.

14. The electrolyte injection apparatus according to claim 13, wherein the sum (H2) of the heights of the lower part of the first zone, the second zone, and the third zone is 30 mm.
